# EUROPEAN PATENT APPLICATION

(11) **EP 0 762 788 A2**
(43) Date of publication of application: **12.03.1997**
(21) Application number: 96113477.2
(22) Date of filing: 22.08.1996
(51) Int. Cl.: H04Q 7/22, H04Q 7/32

(54) **Call reception control method for digital mobile telephone**

(30) Priority: 29.08.1995 JP 243745/95
(71) Applicant: KABUSHIKI KAISHA KENWOOD, Shibuya-ku Tokyo (JP)
(72) Inventor: Hori, Hiroyuki, Machida-shi, Tokyo (JP); Ohtsuka, Shizuo, Sagamihara-shi, Kanagawa (JP)
(74) Representative: Patentanwälte Leinweber & Zimmermann

(57) **Abstract**

A call reception control method for a digital mobile telephone in which super frame information is sent from a base station to a mobile telephone, the super frame information containing broadcast information and paging channel information necessary for call reception by the mobile telephone in the form of unit. The call reception control method includes the steps of: adding in advance information regarding the number of called stations to the paging channel information; and controlling the call reception in accordance with the information regarding the number of called stations received by the mobile telephone. A reduction of the call reception time is suppressed to a minimum when the broadcast information (BCCH) designates a paging channel (PCH) for a plurality of slots.

## Description

### BACKGROUND OF THE INVENTION

### 1. Field of the Invention

The present invention relates to a call reception control method for a digital mobile telephone and more particularly to a call reception control method for a digital mobile telephone capable of stabilizing a call reception time.

### 2. Related Background Art

A mobile telephone (MS) in a conventional digital mobile telephone system such as PDC and GSM is supplied with broadcast information (BCCH) from a base station (BS), and in accordance with the supplied broadcast information, various operations necessary for speech communications are executed. The broadcast information includes a network number (information identifying a provider) necessary for a call reception by the mobile telephone and control channel configuration information (slot information in one super frame). In such a system, data is transferred by time division multiple access (TDMA), and one information is assembled by a plurality of slots (hereinafter called a unit). In PDC, thirty six units is set as one piece of super frame information of one information unit, and the mobile telephone is informed of which one of BCCH, SSCH, and PCH belongs to each of thirty six units. PCH is a paging channel and is used by the mobile telephone as a standard for calculating from its own MSI (mobile station identifier) which unit among thirty six units is to be received. Only the unit obtained by this calculation is received, and the other units are not received to execute a so-called intermittent call reception. With this intermittent call reception, current during the call reception reduces. Namely, since the base station pages the PCH unit corresponding to MSI of the mobile telephone, the mobile telephone receives only the PCH units corresponding to its own MSI.

In a conventional call reception control method for a digital mobile telephone, if the number of PCHs (paging channels) is designated for a plurality of units, the designated units are always received even if useful information is not contained in each designated unit. Therefore, unnecessary current is consumed which may be one reason of shortening a battery life time.

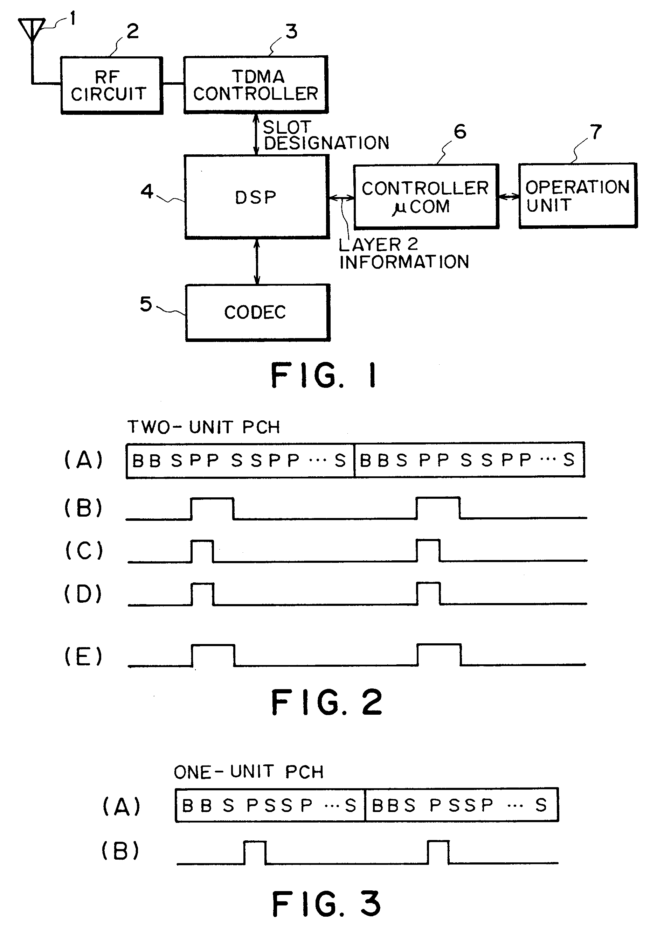

Fig. 3A shows one piece of super frame information when PCH is one unit. The one piece of super frame information is constituted by broadcast information channels B, single cell channels S, and paging channels P. As shown in Fig. 3B, the reception operation is always performed for each of the paging channels P. For example, consider the case where PCH is designated for one unit, one unit length is 20 ms, and the frame period is 720 ms. In this case, if current in the receiving unit is 114 mA and current in the other units is 8 mA, then the average current is 10.9 mA. However, if PCH is designated for two units, the average current is 13.9 mA. If the battery has a capacity of 500 mA, the call reception time is 45 hours and 52 minutes for one unit, and 35 hours and 58 minutes for two units, shortening the call reception time by about 10 hours.

### SUMMARY OF THE INVENTION

It is an object of the present invention to provide a call reception control method for a digital mobile telephone capable of suppressing a reduction of a call reception time to a minimum even if the broadcast information (BCCH) designates the paging channel (PCH) for a plurality of units.

In order to solve the above problem, the present invention provides a call reception control method for a digital mobile telephone in which super frame information is sent from a base station to a mobile telephone, the super frame information containing broadcast information and paging channel information necessary for call reception by the mobile telephone in the form of unit. The call reception control method comprises the steps of: adding in advance information regarding the number of called stations to the paging channel information; and controlling the call reception in accordance with the information regarding the number of called stations received by the mobile telephone.

If there is no information regarding the number of called mobile stations, the following paging channel information belonging to the same group is not received. If the information regarding the number of called mobile stations indicates a plurality of called mobile stations and one paging channel information unit is sufficient for the designation of the number of called mobile stations, the following paging channel information belonging to the same group is not received.

### BRIEF DESCRIPTION OF THE DRAWINGS

Fig.1 is a block diagram showing the structure of a call reception control method for a digital mobile telephone according to an embodiment of the present invention.

Figs. 2A to 2E are timing charts illustrating the operation of the embodiment.

Figs. 3A and 3B are timing charts illustrating the operation of a conventional call reception control method for a digital mobile telephone.

Figs. 4A and 4B are diagrams showing an example of the structure of a PCH unit.

### DETAILED DESCRIPTION OF THE PREFERRED EMBODIMENTS

An embodiment of the invention will be described with reference to the accompanying drawings.

Fig. 1 is a block diagram showing an embodiment of a mobile telephone of the present invention.

A signal received via an antenna 1 from a base station is supplied to an RF circuit 2 whereat it is subjected to an ordinary RF process and supplied to a TDMA controller 3. The TDMA controller 3 designates a TDMA unit via a digital signal processor (high speed controller) 4 under the control of a controller microcomputer 6. The designated unit information is sent to the DSP unit 4. Under the control of the controller 6, the DSP unit 4 checks signal configuration information w contained in the start unit of PCH to be described later, among the unit information sent from the TDMA controller 3, and if it is judged that the PCH information is contained, it outputs an instruction signal to receive the next unit to the TDMA controller 3.

The DSP unit 4 also executes MSI management and transfers a signal to and from a codec unit 5 to perform coding or decoding of voices. The controller 6 executes a control in accordance with operation information supplied from an operation unit 7, and outputs information representative of the operation mode to the operation unit 7. The controller 6 receives the PCH information from the DSP unit 4, and outputs a control signal conforming to a predetermined protocol and MSI information to the DSP unit 4.

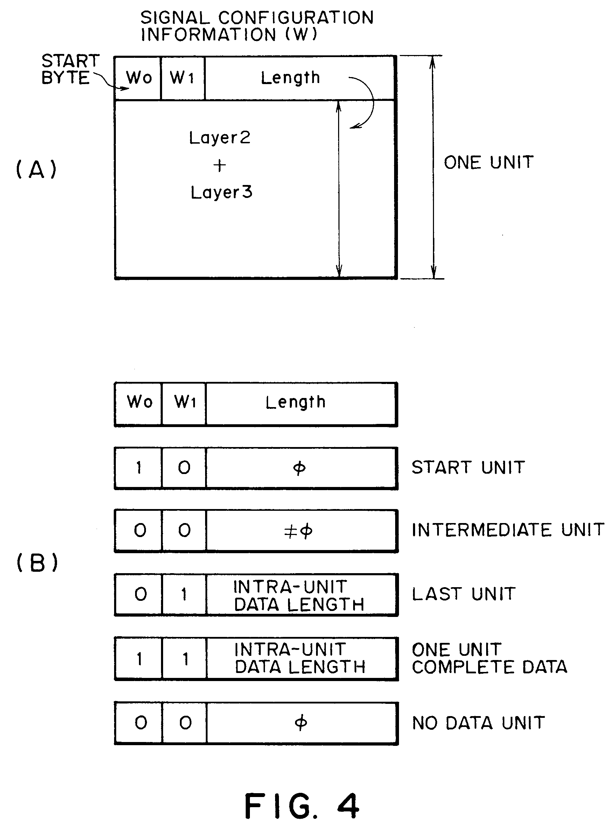

Figs. 4A and 4B show an example of the structure of a PCH unit.

The signal configuration information w contained in the start unit of PCH is disposed at the start field of each unit as shown in Fig. 4A and indicates a presence/absence of valid data in the unit. As shown in Fig. 4B, if there is valid data, the data length in the unit is indicated. If there is valid data in the unit, the information w takes a value other than 0, whereas if there is no valid data in the unit, the information w takes a value of 0.

If the mobile telephone in the intermittent call reception state is instructed by the broadcast information to receive a plurality of units, it always receives only the first PCH unit from the first super frame. The mobile telephone checks the signal configuration information w contained in the first PCH unit, and if it is judged that valid PCH information (second layer information and third layer information) is not contained, the mobile telephone does not perform the call reception operation of the following PCH units until the next frame first PCH unit is received. The second layer information is information of error correction and a message type. The message type indicates the type of the third layer information. The third layer information is information regarding paging, and includes the number of caller stations and the information of the called mobile station identifier (MSI). In this manner, if a call in the same PCH group is not for a plurality of units, the call reception time does not shorten at all even if the number of PCH units increases.

For example, if the number of PCH units is two as shown in Fig. 2A, current has been consumed conventionally during these two units as shown in Fig. 2B. However, in this embodiment of the invention, the signal configuration information w as the information of the number of called mobile stations is monitored, and if it is judged that PCH information is not included, the mobile telephone does not receive the second PCH unit as shown in Fig. 2C. Although the PCH information is contained, if one PCH unit is sufficient for a call and there is no call to the mobile telephone, the second PCH unit is not received as shown in Fig. 2D. If the PCH information is contained and the third layer information cannot be stored in one unit, it is necessary to receive the two PCH units as shown in Fig. 2E.

As above, the mobile telephone monitors the number of called mobile stations contained in the PCH unit, so that only the necessary minimum units are received and unnecessary consumption current can be reduced. Furthermore, since the mobile telephone MSI management can be performed in real time, if the MSI of the mobile telephone is not contained in the PCH unit, the controller microcomputer 6 is not necessary to be activated, reducing the consumption power of this microcomputer.

According to this invention, the signal configuration information w is monitored to determine unnecessary units. Therefore, a more efficient TDMA operation can be realized and it is very effective for the system whose subscribers are expected to increase in the future. Further, the above advantageous effects can be expected also for a battery driven digital system of TDMA.

As described so far, according to the call reception control method for a digital mobile telephone, a critical issue of low consumption power of a digital mobile telephone system can be solved. Particularly, since the base station can be set freely by the broadcast information, even if a plurality of PCH units are designated by the broadcast information in the case of a future increase in subscribers, a call reception time can be prevented from being reduced considerably.

## Claims

1. A call reception control method for a digital mobile telephone in which super frame information is sent from a base station to a mobile telephone, the super frame information containing broadcast information and paging channel information necessary for call reception by the mobile telephone in the form of unit, comprising the steps of:
adding in advance information regarding the number of called stations to the paging channel information; and
controlling the call reception in accordance with the information regarding the number of called stations received by the mobile telephone.

2. A call reception control method according to claim 1, wherein if there is no information regarding the number of called mobile stations, the following paging channel information belonging to the same group is not received.

3. A call reception control method according to claim 1, wherein if the information regarding the number of called mobile stations indicates a plurality of called mobile stations and one paging channel information unit is sufficient for the designation of the number of called mobile stations, the following paging channel information belonging to the same group is not received.
